# EUROPEAN PATENT SPECIFICATION

(11) **EP 3 227 240 B1**
(45) Date of publication and mention of the grant of the patent: **28.08.2019**
(21) Application number: 15828373.9
(22) Date of filing: 01.12.2015
(51) Int. Cl.: C03B 9/33, A47G 19/22, C03B 23/213

(54) **METHOD FOR PRODUCTION OF GLASS PRODUCT WITH CHROMATICALLY AND/OR VISUALLY DIFFERENTIATED PART, GLASS PRODUCT, MAINLY STEMWARE**
VERFAHREN ZUR HERSTELLUNG VON GLASGEGENSTÄNDEN MIT CHROMATISCH UND/ODER VISUELL UNTERSCHIEDLICHEM TEIL, GLASARTIKEL, HAUPTSÄCHLICH STIELGLÄSER
PROCÉDÉ DE PRODUCTION DE PRODUIT DE VERRE AYANT UNE PARTIE CHROMATIQUEMENT ET/OU VISUELLEMENT DIFFÉRENCIÉE, PRODUIT DE VERRE, PRINCIPALEMENT VERRE À PIED

(30) Priority: 01.12.2014 SK 500712014
(43) Date of publication of application: 11.10.2017
(73) Proprietor: RONA, a.s., 020 61 Lednicke Rovne (SK); glaskoch B. Koch jr. GmbH + Co. KG, 33014 Bad Driburg (DE)
(72) Inventor: HLAVÁC , Milos, 018 52 Pruské (SK); KLEINE, Olivier, 33014 Bad Driburg (DE)
(74) Representative: Porubcan, Róbert
(86) International application number: PCT/IB2015/059256
(87) International publication number: WO 2016/088043

(56) References cited:
- DE-A1- 3 132 064
- DE-C1- 10 130 011
- GB-A- 678 686

## Description

### Field of technology

The invention concerns a method of production of a glass product, mainly stemware, where the transparent, clear glass of the stem has in its inside a chromatically and/or visually differentiated part, whereby the surface of the glass is smooth. The invention is designed mainly for production where - after the welding of the two parts of the semifinished product - there is a directed deformation of the glass melt. A glass product is disclosed which has an outer surface smoother than usual and is a result of the new method.

### Prior state of the art

In the past, the color glass melt was already used during production of the glass products; in manual production, this glass melt could have been variously combined with the clear glass. Such products are available in these days as results of handmade crafts. With the increase of the industrial production the presence of multicolor glass products diminished; the industrial production made the production of a single piece of glass significantly cheaper and it ensured the dimensional unity of series of glassware.

The effort to achieve colorfully adorned glass products - mainly glasses for drinks - led to solution according to DE3132064A1, where the drop with different color is created within the stem in such a way that the glass drop is firstly formed into the desired shape and then attached to the bowl in the place where the stem is subsequently attached, too. The stem according to this publication is produced by molding of the pure glass melt in the mold, whereby the glass melt encloses the glass drop. Such solution can only be used for the stem which is pressed directly onto the bowl, which is not very effective way of production. The glass has sharp edges and transitions, which are perceived as old-fashioned and impractical form the point of view of maintaining the hygiene in gastronomic businesses. The glass drop can be located only in a relatively thick part of the glass melt, because a sufficient wrapping of the drop by surrounding glass melt has to be ensured. Such solution cannot be used for thin or smooth stems.

Solution according to publication EP1106122A2 is known, too, where the stem is from different material than the material of the bowl. The material of the stem must have an identical or similar thermal expansion as the bowl. Such solution allows producing chromatically and materially very different stems, but the method for production is demanding in precision; it is complicated and ineffective.

Publication DE 10130011 C1 discloses a layer of powdered fluorescing or phosphorescing luminescent pigments on a first glass section; applying a second glass section covering the luminescent pigment layer on the first glass section; and shaping. The layer is during shaping stretched to a stem and during the stretching the particles of the layer are distributed into the length of the stem; the resulting effect is visually weak and characterless.

A stem can have different color parts also in the case of the published patent US 4,681,236, which has a cavity designed for the insertion of a supplementary body. Such solution, however, leads to the uneven surface of the stem. For aesthetic and practical reasons, products with smooth surface are demanded, and this method according to this earlier patent cannot achieve it.

Similarly, the other earlier known solutions, e.g. US2008128429A1 and GB678686A, do not lead to the requested smooth result with high repeated stability during the serial industrial production. The disadvantage of the known solutions is the unevenness of the chromatically differentiated part which - if it is applied in the thin layer - is not even noticeable enough. The last disadvantage is the low effectiveness of the hitherto known methods of production; the forming of the whole stem from the glass melt from the bottom of the bowl is slow; the new solution should allow the coloring of the stem during production, where the stem is in the form of the semifinished product welded to the bowl and then it is formed into the final form by pulling or stretching, which smoothes out the surfaces and removes the surface irregularities of the joint.

### Subject matter of the invention

Abovementioned deficiencies are significantly remedied by a method of producing a glass product with a chromatically and/or visually differentiated part inside the product, mainly stemware, wherein a bowl (1) and a parison (3) of a stem (33) are firstly shaped independently and then the parison (3) is pushed and welded to the bowl (1) during heat and the parison (3) is stretched into a resulting shape of the stem (33) during the heat, characterized in that a body (2) with different chromatic and/or visual features is placed into a plane of a joint of the parison (3) and the bowl (1), the body (2) is, during the heat, surrounded by a glass melt from the parison (3) and/or the bowl (1) while the parison (3) is pushed to the bowl (1), after welding the bowl (1) to the parison (3), the body (2) is connected with the bowl (1) and the parison (3), and during subsequent stretching of the parison (3) into a resulting form of the stem (3), the body (2) is shaped into a resulting form of a stretched body (22), too.

The significant feature of the invention is the use of the separate body with different chromatic and/or visual features; this can include different chromaticity or different reflectivity and frangibility of light and so on. The adjective "different" or "differentiated" denotes the difference with regard to surrounding mass of glass melt. Different visual features can lie in the fact that the body will contain small particles with different chromaticity, or the body will have air bubbles, and so on. The chromatic and or visual features different from the features of the glass melt of the product will be concentrated in the independent separate body which is placed into the plane of the joint. In the transverse direction the body will have smaller dimension that the corresponding dimension of the surface of the joint, which will usually mean that it will have smaller diameter than the diameter of the end of the parison. This placement will cause the body to be connected both to the mass of the parison and the mass of the bowl after the pressing of the parison to the bowl. The subsequent stretching of the parison in one step causes the shaping of the body, whereby the body is placed inside the glass melt. Because during the stretching of the parison of the stem it is mainly the glass melt of the parison which is being stretched, the body is being deformed in such a way that the part of the body above the plane of the joint on the side of the bowl is being minimally deformed and the part of the body below the plane of the joint on the side of the stem is being deformed significantly more. This turns spherical or similar shape of the body into shape of the drop. The pulling of the glass melt of the parison removes the edge of the joint, which produces a smooth outer surface of the product without transitions, whereby the body inside the glass melt does not deform the outer course of the lines. This is precisely the desired aesthetic and practical state.

One of the advantages of the invention is its low energy demands. Were the chromatic treatments of the glass realized additionally - for example manually -, the glass product would have to have been subsequently heated, which increases the consumption of energy, for example gas. This invention inserts the body to the glass melt during the initial production process; no additional supply of the heat is required. If the term "during the heat" is used in this description, it means that the glass melt has the temperature required for the particular step of production. For example, the temperature of the welding of the parison of the stem to the bowl can be within the range of 820 ±20 °C; the temperature of stretching of the parison can be within the range of 800 ±20 °C. The temperature of the glass melt cooled for the purposes of reaching dimensional and shape stability can be below 380 °C. The body will have a temperature which in individual phases corresponds to the temperature of the surrounding glass melt. With certain simplification the essence of the invention can be described in such a way that for the shaping of the body to the desired shape the stretching of the parison is used, whereby the body is attached on the one side to the bowl and on the other it is pulled by the adhesion forces by which it is connected to the glass melt of the parison. The body is therefore shaped without direct mechanical attachment.

The term "stem" is commonly used in the field of technology of this invention. In German language, the term "der Stiel" is commonly used.

The term "body" in this text denotes any body, object, particle, corpuscle, granule or molding. The use of adjective "little" suggests that the body will usually be smaller and less voluminous than the rest of the parison. The body will have different shapes; it will be preferable if the shape is regular, mainly spherical. This makes the insertion and manipulation with the body easier; in principle, however, the body can have a shape of the polyhedron, ellipsoid, cylinder, combination of thereof, and so on. The body will be primarily made from glass or similarly malleable material.

The placement of the body into the plane of the joint can be realized in multiple ways. In principle the body can be placed in the plane of the joint in the independent step, where it is preferable to heat the body in advance. A manipulator can be used for the insertion, which places the body precisely at the end of the stem or the jut of the bowl. If one does not want to insert the body into the plane of the joint independently, it can be placed at the end of the bowl or the parison already in the process of the production of the parison or bowl.

It has been invented that it is desirable if the body is placed into the mold in which the parison is pressed out from the glass melt. On the bottom of the mold (the bottom holder) there is a cavity which corresponds, for example, to the half of the body. The body is placed into the cavity in the mold and then it is - by means of pressing - wrapped and glued together by the glass melt of the parison. The advantage is that the body is placed within the parison in the exact position according to its position in the mold; usually it is placed concentrically with the stem of the parison and the mold is then well-connected with the glass melt of the parison. The depth of the embedding or dipping of the body into the mass of the parison is in this case set by the dimension and shape of the cavity in the mold. It is also possible to take into account the technological demands; for example, in order to achieve sufficient pre-heating of the whole spherical body it is preferable to embed the body into 3/5 of its diameter, or height in the case of the non-spherical body, respectively. The change of the depth of the dipping or embedding of the body into the mass of the parison is adjusted with regard to the resulting shape of the body after stretching, too.

The body gets to the plane of the joint together with the parison. This process is advantageous because it does not require the adjustments of the carousel machine in which the parison is welded to the bowl and in which the parison is pulled into the resulting form of the stem.

The body is embedded in the parison in the pressing machine - or molding machine -; then the parison is treated similarly as in the previous, known method of production and it is therefore possible to use the original carousel welding and stretching machine without the diminishing of the productive capacity. The body is placed into the cavity in the mold without preheating; the body is heated by the glass melt with the temperature of 950 ±30 °C while being molded into the parison form. This temperature is sufficient for the good connection of the body with the mass of the parison; the process of the molding of the parison does not cause the deformation of the body which is preserved in the clear glass of the parison in its original shape. After the welding of the parison with the bowl, the end of the parison as well as the end of the bowl is heated by the gas flame to the temperature of the welding. After the welding, the parison is stretched at the temperature of 800 ±20 °C; the temperature of the body in the parison reaches similar temperature. After the releasing of the semifinished product from the machine the temperature of the stem must fall below 380 ±20 °C, so the semifinished product is not spontaneously deformed and new undesired shape or dimensional errors do not appear.

The plane of the joint can be set and pushed within the stem, which makes place for various placements of the body. The shapes of the stretched body can be achieved by the changes of the extent of the embedding of the body in the parison, too. If the body is half-embedded, half of the body will be welded to the bowl after the welding, whereby the bowl is practically not being deformed during the stretching, and the second half of the body will be part of the parison which is being significantly deformed and stretched. By pulling, the stem of the parison is thinning and stretching. The course of the deformations is dependent on the distribution of the temperatures; but since the temperature field in the glass melt is always continuous, the resulting deformation is continuous, too, and the achieved shape and course of the curves is fluent. If half of the spherical body (on the side of the bowl) is not being deformed and the other one (on the side of the parison) is controllably stretched, which results in the desired shape of the drop.

The deficiencies in the prior state of the art are significantly remedied by the glass product itself, mainly a glass from the clear glass with the stretched stem, with chromatically and/or visually differentiated part inside the stem according to this invention, which essence lies in the fact that the chromatically and/or visually differentiated part is produced by stretching of the initially independent body with different chromatic and/or visual features, whereby the surface of the stem in the vicinity of the body is smooth. The body in the resulting shape has, in the transversal direction, smaller dimension than is the dimension of the stem. Because the circle will be the most common cross-section of the stem, the dimension of the body and stem will usually be a diameter.

The advantage of the proposed invention is the high effectiveness of the production of the adorned glass products with totally perfect, smooth outer shape. The invention does not require any adjustments of the welding machine and at the same time ensure high dimensional and shape accuracy of the repeated production. Last but not the least, the low energy and storage demands are advantageous, too, since the process does not require new or repeated heating, and does not require new operating positions of the machines in the production. The resulting product is aesthetically pleasing and it has a desired regular dimensional and shape precision.

### Brief description of drawings

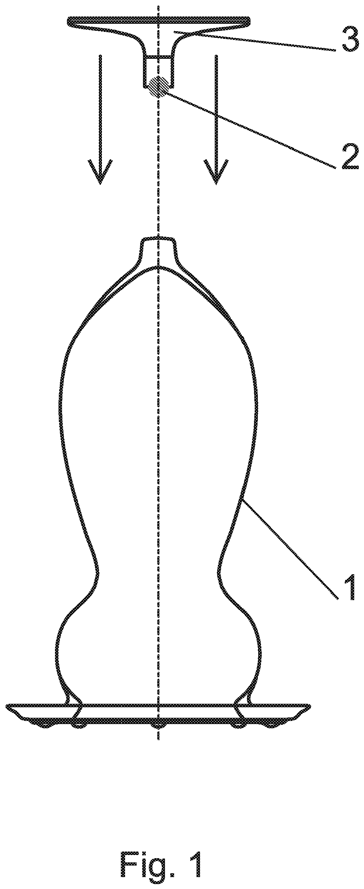

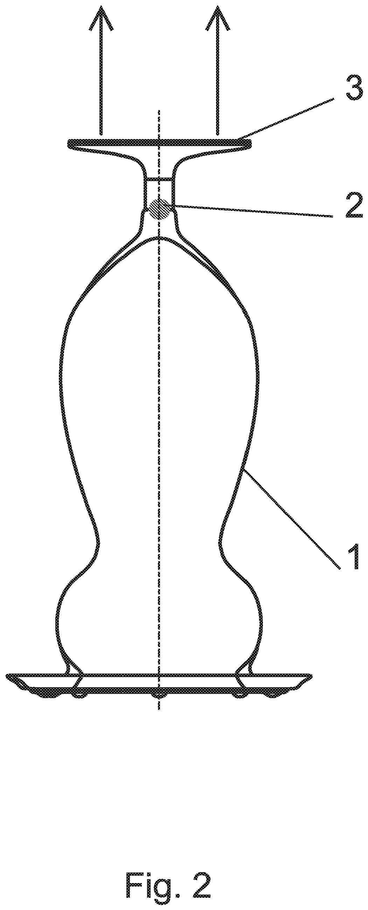

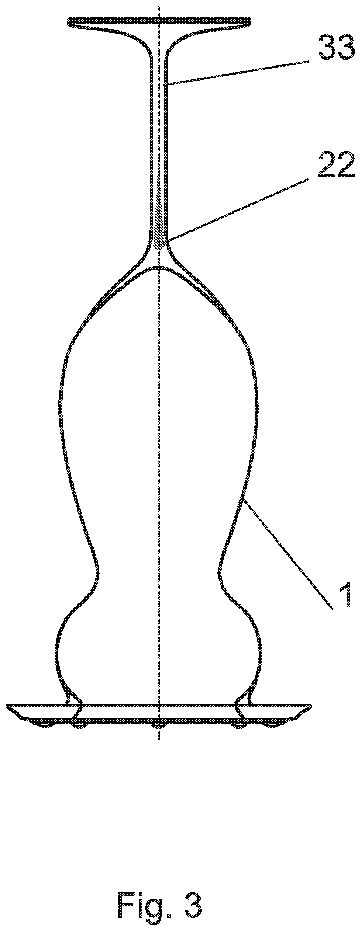

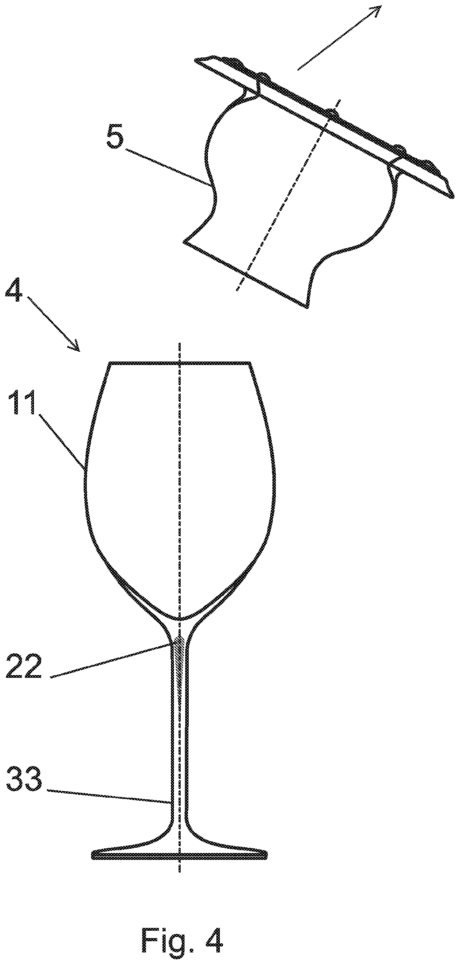

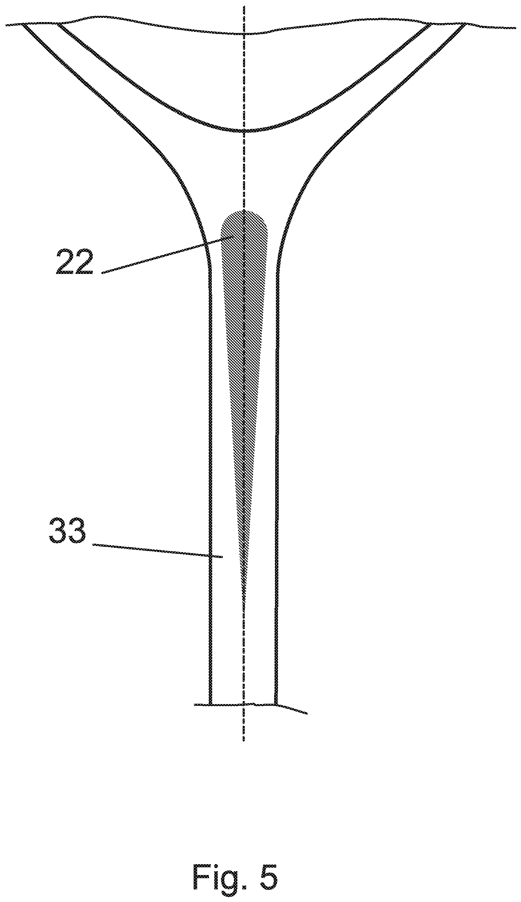

The invention is further disclosed by the figures 1 to 5. The used scales and ratios of size of the parison, bowl, and body is non-binding, informative, or it has been directly adjusted in order to increase clarity. The chosen sizes, ratios and shapes cannot be understood as limiting the scope of protection. The figures 1 to 3 depict a glass, or the glass as the semifinished product, respectively, upside down, because in the example of realization such method of production is described in which on the carousel machine the glass is led and processed in this position. This position is only an example which cannot be understood as limiting the scope of protection. In order to increase clarity the parts of the machine which hold the bowl and the parison, or the glass with the cap, respectively, are left out.
Figure 1 depicts a placement of the body in the parison of the stem before its connection to the bowl. The arrows show the direction of the pushing of the parison during being welded to the bowl.
Figure 2 shows the welding of the parison with the bowl and the subsequent direction of the stretching of the parison with the body on the inside.
Figure 3 depicts the stretching of the parison into the resulting form of the stem and the subsequent stretching of the body into the resulting shape of the tear drop.
Figure 4 depicts the separation of the cap of the bowl, by which the final shape of the product is achieved.
Figure 5 is a detail view of the body in the axis of the stem without the irregularities on the outer surface of the stem and the bowl.

### Examples of realization

### Example 1

In this example according to figures 1 to 5 the invention is realized in the production of the glass 4 with the stem, for example wine class 4. Such glass 4 has been hitherto produced from the clear glass, whereby the bowl 1 with the cap 5 has been firstly produced by blowing on the blowing machine. The cap 5 serves for the attachment of the product in the machines' devices, mainly in the carousel machine where the bowl 1 is welded with the parison 3. The parison 3 is produced by molding of the glass melt in the two-part mold.

The mold for the parison 3 according to this invention is adjusted in such a way that in the part which corresponds to the end of the stem of the parison it has a cavity shaped in accordance with the inserted element, in this case a hemisphere. The diameter of the hemisphere is smaller than the diameter of the end of the stem of the parison 3; the diameter of the cavity corresponds to the diameter of the body 2. The body 2 in this case has a regular spherical shape and it is produced from the glass of the strongly green color (e.g. Emerald 20). The cavity in the mold for the body 2 has in this example a depth of the semidiameter of the spherical body 2. The body 2 is inserted to the closed mold by the manipulator, whereby it falls into the cavity in the form. After the batching and pressing an exact amount of the clear glass melt is injected inside; it flows into the shape of the mold and wraps and glues the body 2; more precisely - it flows around the hemisphere of the body 2 which is not embedded in the cavity in the mold. After the opening of the mold the parison 3 with the body 2 is taken out and it is transferred to the carousel machine for welding while it is still hot.

In this example the parison 3 is welded to the bowl 1 while the bowl 1 is upside down. Both parts are held in the rotating heads which during the production not only move into the individual operating positions on the circumference of the carousel, but also rotate in the axis of the stem 33 and the bowl 1. The axial rotation secures the regular heating of the glass by the torches distributed outside on the circumference of the carousel. The carousel has rotating heads always placed in pairs above each other; the upper rotating head holds the parison 3 and the lower holds the bowl 1. Besides the axial rotation and the movement on the circumference of the carousel, the rotating heads allow for changes in the mutual distance.

In another example another position or method of the holding and positioning during welding and pulling can be used; what is important for the invention is the placing of the body 2 in the plane of the joint and its pulling alongside the stretching of the parison 3.

Both parts - the bowl 1 and the parison 3 - are produced industrially from the homogenous clear glass material of the identical composition and color; they have identical dimensions and shapes within the same series with the allowed margin of error in tenths of millimeters. After the mounting of the rotation heads, both parts enter into the flames of torches which ensure the heating of the jut of the bowl 1 and the end of the parison 3 with the body 2 to the welding temperature of 820 ±20 °C. By approximating both heads together the parison 3 is pushed to the bowl 1 and the glass melt is welded, whereby half of the body 2 protruding from the stem of the parison 1 is welded with the jut of the bowl 1, too. After the welding the rotating heads with the attached parison 3 and bowl 1 start to move in distance from each other; the stem of the parison 3 is at that moment heated to the stretching temperature 800 ±20 °C. This distancing causes the deformation and stretching of the semifinished product, whereby only such part of the semifinished product which has a sufficient temperature is being stretched. The bowl 1 and the base of the stem 33 have lower temperature; that is, for example, by directioning of the gas torches and by their regulation a desired thermal field is produced, which defines the zone of the stretching of the parison 3. A directed deformation of the parison 3 is correlated with the shaping of the body 2, which is also located in the thermal field above the temperature of the stretching. The length of the stretching is set by means of the machine by setting the distance in which the rotating heads move away from each other after the welding of the parison 3 with the bowl 1. The stretching is, thanks to the natural features of the glass melt, accompanied by thinning of the stem and smoothing of the outer transitional irregularities; this approach smoothes the joint in the welding plane, too. Because the semifinished product axially rotates during the movement and the application of heat is thus regular, one does not only achieve smooth outer surfaces but also a coaxial circular cross-section of the stem 33.

After achieving the desired length of the stretching, the rotational heads move around the circumference of the carousel to the places where the torches no longer heat up; the stem 33 is cooled to the temperature of formability at 380 °C. In this step the dimensional stability and repeatable precision is already ensured; the semifinished product can be taken out of the grip of the rotational heads.

After the semifinished product leaves the welding machine, the stem 33 of the final length and diameter is produced out of the parison 3 and the resulting prolonged tear drop shaped body 22 is produced out of the body 2. In this stage the semifinished product has a cap 5, which is subsequently separated from the bowl 11 by known methods. The separation of the cap 5, the rounding of the cutting edge which remains after the removal of the cap 5, and the detempering are realized by the known methods.

A person skilled in the art can create other versions of the similarly processed products on the basis of this example; the glasses 4 can have a stem 33 with the body 22 of different colors and shapes. The plane of the joint can moved within the range of the stem 33, which achieves a different placing of the body 22. Different shapes of the body 22 can be reached by the change in the depth of the embedding of the body 2 in the parison 3.

### Example 2

In this example the body 2 is blue and little glittering particles are diffused in it. The heated body 2 is placed on the malleable end of the bowl 1 by the manipulator and partially pushed inside its glass melt. In the subsequent welding and pulling of the parison 3 into the resulting shape of the stem 33 the body 2 is stretched, which at the same time distributes the fine glittering particles within the body 2. This results in the distribution of the particles in the stem 33 within the range of the stretched body 22.

### Industrial applicability

Industrial applicability is obvious. According to this invention it is possible to repeatedly produce and use glass products with the chromatically and/or visually differentiated part, mainly stemware, whereby high effectiveness of the industrial production is preserved and the resulting products are uniform in shape and size.

### List of related symbols

1- bowl with the cap
   11 - bowl
2- body
   22 - body after stretching
3- parison of the stem
   33 - stem
4- glass with the stem
5- cap of the bowl

## Claims

1. A method of producing a glass product with a chromatically and/or visually differentiated part inside the product, mainly stemware, wherein a bowl (1) and a parison (3) of a stem (33) are firstly shaped independently and then the parison (3) is pushed and welded to the bowl (1) during heat and the parison (3) is stretched into a resulting shape of the stem (33) during the heat, **characterized in that**
a body (2) with different chromatic and/or visual features is placed into a plane of a joint of the parison (3) and the bowl (1),
the body (2) is, during the heat, surrounded by a glass melt from the parison (3) and/or the bowl (1) while the parison (3) is pushed to the bowl (1),
after welding the bowl (1) to the parison (3), the body (2) is connected with the bowl (1) and the parison (3), and
during subsequent stretching of the parison (3) into a resulting form of the stem (3), the body (2) is shaped into a resulting form of a stretched body (22), too.

2. The method according to claim 1, **characterized in that** during stretching of the parison (3), its stem together with the body (2) is prolonging and thinning, whereby a flow of the glass melt during the stretching smoothes out an outer surface of the glass melt in a zone of welding of the parison (3) to the bowl (1).

3. The method according to claim 1 or 2, **characterized in that** the body (2) has a smaller dimension in a transverse direction than a respective dimension of a surface of the joint, and the stretched body (22) is in a resulting product wholly concealed inside the glass of the stem (33).

4. The method according to any of claims 1 to 3, **characterized in that** the body (2) has a color different from a color of the glass of the bowl (1) and/or from the glass of the stem (33).

5. The method according to any of claims 1 to 4, **characterized in that** the body (2) contains small particles from a material with the different visual features than the body (2), preferably with a thermal expansion that is similar to a thermal expansion of glass.

6. The method according to any of claims 1 to 5, **characterized in that** the body (2) has a shape of a sphere or an ellipsoid or a cylinder or a regular polyhedron.

7. The method according to any of claims 1 to 6, **characterized in that** a temperature of the stretching of the parison (3) is at least 800 °C ± 20 °C, preferably 820 °C.

8. The method according to any of claims 1 to 7, **characterized in that** the body (2) is placed into the plane of the joint together with the parison (3), whereby the body (2) is embedded on an end of the parison (3).

9. The method according to claim 8, **characterized in that** the body (2) is connected with the parison (3) in such a way that during molding or pressing of the parison (3), the body (2) is embedded into a mold of the parison (3); the glass melt is subsequently injected into the mold; preferably it is injected in such a way that after molding or pressing a part of the body (2) protrudes from a surface on the end of the parison (3); especially preferably it is injected in such a way that 2/5 to ½ of the body (2) protrudes.

10. The method according to any of claims 1 to 9, **characterized in that** before a release of a semi-finished product from a welding machine, the stem (33) is cooled to the temperature below 380 °C ± 20 °C.

11. The method according to any of claims 1 to 10, **characterized in that** during welding and stretching of the parison (1), the bowl is attached in a rotating head of a carousel machine by means of a cap (5), the cap (5) being later removed and a separating edge of a bowl (11) being trimmed and processed.

12. The method according to any of claims 1 to 11 , **characterized in that** the surface of the glass of the stem (33) in a vicinity of a stretched body (22) is smooth and fluid.

13. The method according to any of claims 1 to 12, **characterized in that** the stretched solid body (22) has a shape of a drop and/or a tear drop.

14. The method according to any of claims 1 to 13 , **characterized in that** a curve of a profile of the bowl (11) with a connection to the stem (33) and a base of the stem (33) is fluid and without transition edges.

## Patentansprüche

1. Verfahren zum Herstellen eines Glasprodukts mit einem farblich und/oder visuell unterschiedlichen Teil innen in dem Produkt, hauptsächlich Stielglasware, wobei eine Kugel oder Schale (1) und ein Vorformling (3) eines Stiels (33) zunächst unabhängig voneinander geformt und dann der Vorformling (3) zu der Schale (1) gedrückt und mit dieser durch Wärme verschweißt und der Vorformling (3) in eine resultierende Form des Stiels (33) während dieser Wärme gezogen wird, **dadurch gekennzeichnet, dass**
ein Körper (2) mit anderen farblichen und/oder visuellen Merkmalen in eine Verbindungsebene zwischen dem Vorformling (3) und der Schale (1) gebracht wird,
der Körper (2) während der Wärme durch geschmolzenes Glas von dem Vorformling (3) und/oder der Schale (1) umgeben ist, während der Vorformling (3) zu der Schale (1) gedrückt wird,
der Körper (2) mit der Schale (1) und dem Stiel (3) verbunden wird, nachdem die Schale (1) mit dem Stiel (2) verschweißt wurde, und
der Körper (2) ebenfalls in eine resultierende Form eines gezogenen Körpers (22) während des anschließenden Streckens des Stiels (3) in eine resultierende Form des Stiels (3) geformt wird.

2. Verfahren nach Anspruch 1, **dadurch gekennzeichnet, dass** sich während des Streckens des Vorformlings (3) sein Stiel gemeinsam mit dem Körper (2) verlängert und verdünnt, wobei ein Fluss der Glasschmelze während des Streckens eine äußere Oberfläche der Glasschmelze in einer Schweißzone zwischen dem Vorformling (3) und der Schale (1) glättet.

3. Verfahren nach Anspruch 1 oder 2, **dadurch gekennzeichnet, dass** der Körper (2) ein kleineres Abmaß in einer Querrichtung als ein entsprechendes Abmaß einer Oberfläche der Verbindung besitzt und der gestreckte Körper (22) in einem resultierenden Produkt vollständig in dem Glas des Stiels (33) verborgen ist.

4. Verfahren nach mindestens einem der Ansprüche 1 bis 3, **dadurch gekennzeichnet, dass** der Körper (2) eine andere Farbe als das Glas der Schale (1) und/oder das Glas des Stiels (33) besitzt.

5. Verfahren nach mindestens einem der Ansprüche 1 bis 4, **dadurch gekennzeichnet, dass** der Körper (2) kleine Partikel aus einem Material mit unterschiedlichen visuellen Merkmalen als der Körper (2) aufweist, vorzugsweise mit einer ähnlichen Wärmeausdehnung wie Glas.

6. Verfahren nach mindestens einem der Ansprüche 1 bis 5, **dadurch gekennzeichnet, dass** der Körper (2) die Form einer Kugel, eines Ellipsoids, eines Zylinders oder eines regelmäßigen Polyeders besitzt.

7. Verfahren nach mindestens einem der Ansprüche 1 bis 6, **dadurch gekennzeichnet, dass** die Temperatur beim Strecken des Vorformlings (3) mindestens 800 °C ± 20 °C, vorzugsweise 820 °C, beträgt.

8. Verfahren nach mindestens einem der Ansprüche 1 bis 7, **dadurch gekennzeichnet, dass** der Körper (2) gemeinsam mit dem Vorformling (3) in die Verbindungsebene gegeben wird, wobei der Körper (2) an einem Ende des Vorformlings (3) eingebettet ist.

9. Verfahren nach Anspruch 8, **dadurch gekennzeichnet, dass** der Körper (2) mit dem Vorformling (3) in einer solchen Weise verbunden ist, dass während des Gießens oder Pressens des Vorformlings (3) der Körper (2) in einer Gießform des Vorformlings (3) eingebettet ist; wobei die Glasschmelze anschließend in die Gießform eingespritzt wird; wobei sie vorzugsweise in einer solchen Weise eingespritzt wird, dass sie nach dem Gießen oder Pressen eines Teils des Körpers (2) aus einer Oberfläche des Endes des Vorformlings (3) hervorsteht; wobei sie vorzugsweise in einer solchen Weise eingespritzt wird, dass 2/5 bis 1/2 des Körpers (2) hervorsteht.

10. Verfahren nach mindestens einem der Ansprüche 1 bis 9, **dadurch gekennzeichnet, dass** vor einem Freigeben eines Halbfertigprodukts aus einer Schweißmaschine der Stiel (33) auf eine Temperatur unterhalb von 380 °C ± 20 °C gekühlt wird.

11. Verfahren nach mindestens einem der Ansprüche 1 bis 10, **dadurch gekennzeichnet, dass** während des Schweißens und Streckens des Vorformlings (1) die Schüssel in einem rotierenden Kopf einer Karussellmaschine mittels einer Kappe (5) befestigt ist, wobei die Kappe (5) später entfernt und eine Trennkante einer Schüssel (11) geschnitten und verarbeitet wird.

12. Verfahren nach mindestens einem der Ansprüche 1 bis 11, **dadurch gekennzeichnet, dass** die Oberfläche des Glases des Stiels (33) benachbart zu einem gestreckten Körper (22) glatt und fließend ist.

13. Verfahren nach mindestens einem der Ansprüche 1 bis 12, **dadurch gekennzeichnet, dass** der gestreckte feste Körper (22) die Form eines Tropfens und/oder einer Träne besitzt.

14. Verfahren nach mindestens einem der Ansprüche 1 bis 13, **dadurch gekennzeichnet, dass** eine Kurve des Profils der Schüssel (11) mit einer Verbindung des Stiels (33) und einer Basis des Stiels (33) fließend und ohne Übergangskanten ist.

## Revendications

1. Procédé pour produire un produit en verre avec une partie chromatiquement et/ou visuellement différenciée à l'intérieur du produit, principalement un verre à pied, dans lequel une coupe (1) et une paraison (3) d'une tige (33) sont tout d'abord formées indépendamment et ensuite la paraison (3) est poussée et soudée à la coupe (1) pendant la chauffe, et la paraison (3) est étirée en une forme résultante de la tige (33) pendant la chauffe, **caractérisé en ce que**:
un corps (2) avec différentes caractéristiques chromatiques et/ou visuelles est placé dans un plan d'un joint de la paraison (3) et de la coupe (1),
le corps (2) est, pendant la chauffe, entouré par un verre en fusion de la paraison (3) et/ou de la coupe (1) alors que la paraison (3) est poussée vers la coupe (1),
après le soudage de la coupe (1) à la paraison (3), le corps (2) est raccordé avec la coupe (1) et la paraison (3), et
pendant l'étirement successif de la paraison (3) en une forme résultante de la tige (3), le corps (2) est formé en une forme résultante d'un corps étiré (22) également.

2. Procédé selon la revendication 1, **caractérisé en ce que** pendant l'étirement de la paraison (3), sa tige conjointement avec le corps (2) s'allonge et s'amincit, moyennant quoi un écoulement de verre en fusion pendant l'étirement, lisse une surface externe du verre en fusion dans une zone de soudage de la paraison (3) sur la coupe (1).

3. Procédé selon la revendication 1 ou 2, **caractérisé en ce que** le corps (2) a une plus petite dimension dans une direction transversale qu'une dimension respective d'une surface du joint et le corps étiré (22) est dans un produit résultant complètement dissimulé à l'intérieur du verre de la tige (33).

4. Procédé selon l'une quelconque des revendications 1 à 3, **caractérisé en ce que** le corps (2) a une couleur différente d'une couleur du verre de la coupe (1) et/ou du verre de la tige (33).

5. Procédé selon l'une quelconque des revendications 1 à 4, **caractérisé en ce que** le corps (2) contient de petites particules d'un matériau avec des caractéristiques visuelles différentes du corps (2), de préférence avec une expansion thermique qui est similaire à une expansion thermique du verre.

6. Procédé selon l'une quelconque des revendications 1 à 5, **caractérisé en ce que** le corps (2) a une forme de sphère ou d'ellipse ou de cylindre ou de polyèdre régulier.

7. Procédé selon l'une quelconque des revendications 1 à 6, **caractérisé en ce qu'**une température de l'étirement de la paraison (3) est d'au moins 800 °C ± 20°C, de préférence 820 °C.

8. Procédé selon l'une quelconque des revendications 1 à 7, **caractérisé en ce que** le corps (2) est placé dans le plan du joint conjointement avec la paraison (3), moyennant quoi le corps (2) est encastré sur une extrémité de la paraison (3).

9. Procédé selon la revendication 8, **caractérisé en ce que** le corps (2) est raccordé avec la paraison (3) de sorte que pendant le moulage ou la pression de la paraison (3), le corps (2) est encastré dans un moule de la paraison (3); le verre en fusion est ensuite injecté dans le moule; de préférence il est injecté de sorte qu'après le moulage ou la pression, une partie du corps (2) fait saillie d'une surface sur l'extrémité de la paraison (3); en particulier de préférence il est injecté de sorte que 2/5 à 1/2 du corps (2) fait saillie.

10. Procédé selon l'une quelconque des revendications 1 à 9, **caractérisé en ce qu'**avant un démoulage d'un produit semi-fini d'une machine de soudage, la tige (33) est refroidie à une température inférieure à 380 °C ± 20 °C.

11. Procédé selon l'une quelconque des revendications 1 à 10, **caractérisé en ce que** pendant le soudage et l'étirement de la paraison (1), la coupe est fixée dans une tête rotative d'une machine à carrousel au moyen d'un capuchon (5), le capuchon (5) étant retiré ultérieurement et un bord de séparation d'une coupe (11) est coupé et traité.

12. Procédé selon l'une quelconque des revendications 1 à 11, **caractérisé en ce que** la surface du verre de la tige (33) à proximité d'un corps étiré (22) est lisse et fluide.

13. Procédé selon l'une quelconque des revendications 1 à 12, **caractérisé en ce que** le corps solide étiré (22) a une forme de goutte et/ou de larme.

14. Procédé selon l'une quelconque des revendications 1 à 13, **caractérisé en ce qu'**une courbe d'un profilé de la coupe (11) avec un raccordement à la tige (33) et à une base de la tige (33) est fluide et sans bords de transition.
